# EUROPÄISCHE PATENTANMELDUNG

(11) **EP 1 445 080 A1**
(43) Veröffentlichungstag der Anmeldung: **11.08.2004**
(21) Anmeldenummer: 04002006.7
(22) Anmeldetag: 30.01.2004
(51) Int. Cl.: B26F 1/40, B26D 7/26, B23Q 5/28, B23Q 1/01

(54) **Stanzvorrichtung**

(30) Priorität: 06.02.2003 DE 10305045
(71) Anmelder: Leiner GmbH, 66957 Trulben (DE)
(72) Erfinder: Leiner, Bernhard, 66957 Vinningen (DE)
(74) Vertreter: Patentanwälte Möll und Bitterich

(57) **Zusammenfassung**

Die Erfindung betrifft eine Vorrichtung zum Stanzen von Stanzgut, insbesondere eine Karrenbalkenstanze (1), mit einem Stanztisch (6) zur Aufnahme des Stanzguts, und einem Stanzaggregat (9), das für den Stanzvorgang auf den Stanztisch (6) absenkbar ist. Das Stanzaggregat (9) ist dabei zumindest in einer Richtung parallel zur Oberfläche (7) des Stanztisches (6) entlang einer ersten Linearführung (8) beweglich angeordnet, wobei als Antrieb ein Linearmotor (55) zum Einsatz kommt. Auf diese Weise lässt sich das Stanzaggregat mit sehr hoher Genauigkeit und sehr kurzen Taktzeiten auf das Stanzgut absenken.

## Beschreibung

Die Erfindung betrifft eine Stanzvorrichtung gemäß dem Oberbegriff des unabhängigen Patentanspruchs 1.

Die Herstellung von Stanzzuschnitten mit gattungsgemäßen Stanzvorrichtungen ist in den unterschiedlichsten Wirtschaftszweigen bekannt. Dementsprechend viele unterschiedliche Arten von Stanzgut werden in gattungsgemäßen Vorrichtungen verarbeitet. Beispielhaft seien Papier, Leder, textile und andere Gewebe sowie Kunststoffe erwähnt. Für den Stanzvorgang wird das Stanzgut auf dem Stanztisch unterhalb des Stanzaggregats positioniert. Durch Absenken der Stanzwerkzeuge auf den Stanztisch findet der Stanzvorgang statt. Um das Stanzgut, das in Form von Bahnen oder Bögen vorliegt, optimal auszunutzen, ist es ebenfalls bekannt, das Stanzaggregat derart verschieblich an einer Linearführung aufzuhängen, dass es mit Hilfe eines Antriebs über die gesamte Breite des Stanztisches bewegt werden kann. In Verbindung mit der Längsverschieblichkeit des Stanzgutes mit oder auf dem Stanztisch ist auf diese Weise jede Stelle des Stanzguts von dem Stanzwerkzeug erreichbar.

Eine derartige Stanzvorrichtung ist beispielsweise aus der DE 100 51 098 A1 bekannt. Dort ist eine Karrenbalkenstanze offenbart, deren Stanzaggregat an einem Maschinenträger aufgehängt ist und das entlang einer Linearführung parallel zum Stanztisch über dessen gesamte Breite verfahrbar ist. Als Antrieb für das Querfahren des Stanzaggregats ist ein Spindelantrieb bekannt, dessen rotierende Gewindespindel im Maschinenträger untergebracht ist, während die mit der Gewindespindel zusammenwirkende Spindelmutter mit einem Wagen verbunden ist an dem das Stanzaggregat befestigt ist.

Eine hierzu bekannte Alternative besteht in der Verwendung eines Zahnriemenantriebs, der innerhalb des Maschinenträgers verläuft und dessen Zahnriemen fest mit dem Wagen des Stanzaggregats verbunden ist. Über einen Servomotor mit Zahnrad wird das Querfahren des Stanzaggregats ausgeführt.

Der Nachteil der bekannten Antriebe für das Querfahren des Stanzaggregats liegt zunächst in den mit Spiel behafteten Antrieben. Trotz der Verwendung von Präzisionsteilen lässt sich das Positionieren des Stanzaggregats entlang des Maschinenträgers lediglich mit einer Genauigkeit von ± 0,1 mm bewerkstelligen. Der Grund hierfür liegt in der Zwischenschaltung mechanischer Übertragungsglieder zur Erzeugung einer translatorischen Bewegung, die konstruktions- und verschleißbedingt stets ein Minimum an Spiel aufweisen. Im Fall des Zahnriemenantriebs wirkt sich zudem dessen Elastizität nachteilig aus.

Das Vorhandensein eines Spiels innerhalb der genannten Grenzen führt zum einen zu Ungenauigkeiten beim Stanzvorgang, was zwar bei einer Vielzahl von Anwendungsfällen hingenommen werden kann, sich jedoch bei einer intensiven Nutzung der Stanzvorlage als problematisch erweist. In jüngster Zeit werden die Stanzausschnitte im Zuge des Nestings derart eng aneinander gelegt, dass sich deren Umrisslinien tangieren. Das heißt, dass die in der vorangegangenen Stanzung erzeugte Schnittkante gleichzeitig die Schnittkante für die nachfolgende Stanzung bildet. Die dabei geforderte hohe Präzision ist mit bekannten Stanzvorrichtungen nicht erreichbar.

Zum anderen kommt infolge des Spiels in Verbindung mit den zahlreichen Beschleunigungs- und Abbremsvorgänge während des Nachstellens des Stanzaggregats ein weiterer Nachteil zum Tragen. Der ständige Wechsel zwischen Beschleunigungs- und Abbremskräften erzeugt mit jedem Lastwechsel einen Schlag zwischen den beweglichen Teilen, was den Verschleiß gattungsgemäßer Stanzvorrichtungen erhöht und ein vorzeitiges Auswechseln der davon betroffenen Teile erfordert.

Weiter ist bei den bekannten Stanzvorrichtungen zu bemerken, dass die Antriebskräfte für das Stanzaggregat in dessen Aufhängepunkt wirken, dessen Schwerpunkt aber weit unterhalb liegt. Dadurch werden beim Beschleunigen bzw. Abbremsen der Querbewegung des Stanzaggregats Kippmomente wirksam, die im Lagerpunkt des Stanzaggregats aufgenommen werden müssen. Da das Eigengewicht bekannter Stanzaggregate nicht selten über einer Tonne liegt, ist eine Dimensionierung der entsprechenden Bauteile im Rahmen des vernünftigen nur möglich, wenn die Beschleunigungs- bzw. Verzögerungswerte innerhalb bestimmter Grenzen gehalten werden. Dies geht allerdings auf Kosten der Maschinenleistung, wodurch die Wirtschaftlichkeit einer solchen Stanzvorrichtung insgesamt beeinträchtigt ist.

Darüber hinaus sind Endgeschwindigkeit und Beschleunigung von Spindel- oder Zahnriemenantrieben nicht besonders hoch. Die sich daraus ergebenden relativ großen Taktzeiten beim Stanzen beeinträchtigen zwangsläufig die Leistungsfähigkeit gattungsgemäßer Stanzvorrichtungen und damit deren Wirtschaftlichkeit.

Vor diesem Hintergrund stellt sich der Erfindung die Aufgabe, eine Stanzvorrichtung anzugeben, die hinsichtlich Präzision und Wirtschaftlichkeit den eingangs erwähnten Vorrichtungen überlegen ist.

Diese Aufgabe wird durch eine Stanzvorrichtung mit den Merkmalen des Patentanspruchs 1 gelöst.

Vorteilhafte Ausführungsformen ergeben sich aus den Unteransprüchen.

Der Vorteil der Erfindung liegt einerseits in der hohen Genauigkeit, mit der das Stanzaggregat über dem Stanzgut positioniert und darauf abgesenkt werden kann. Dadurch ist es möglich, Qualitätsstanzungen mit bisher unbekannter Exaktheit auszuführen. In der Folge eröffnen sich den Betreibern erfindungsgemäßer Stanzvorrichtungen neue Anwendungsfelder, die ihnen zu erheblichen Wettbewerbsvorteilen auf dem Markt verhelfen.

Andererseits lassen sich erfindungsgemäße Stanzvorrichtung mit hoher Beschleunigung und Endgeschwindigkeit über den Stanztisch bewegen, so dass die Taktzeiten beim Stanz verkürzt werden und sich dadurch die Stanzleistung einer erfindungsgemäßen Vorrichtung erhöht.

Gemäß einer vorteilhaften Ausführungsform der Erfindung wirkt der Antrieb auf das Stanzaggregat in der Nähe des Schwerpunkts oder im Schwerpunkt ein, so dass beim Beschleunigen oder Verzögern möglichst geringe dynamische Kräfte entstehen, wie zum Beispiel Kippmomente.

Eine besonders vorteilhafte Ausführungsform der Erfindung sieht eine zweite Linearführung vor, entlang der der Antrieb angeordnet ist. Auf diese Weise wird das Stanzaggregat beim Querfahren sowohl von der ersten als auch zweiten Linearführung gehalten, was erheblich zur Erhöhung der Stanzgenauigkeit beiträgt. Gleichzeitig kann dadurch der Kraftübertragungsbereich vom Antrieb auf das Stanzaggregat möglichst nahe an den Schwerpunkt gebracht werden mit den bereits beschriebenen Vorteilen.

Eine vorteilhafte Ausführungsform der Erfindung sieht zur Kraftübertragung eine Klammer mit zwei Armen vor, die das Stanzaggregat bis zur Hälfte umgreifen und zwischen denen das Stanzaggregat eingespannt ist. Zu diesem Zweck sind im Kraftübertragungsbereich vorteilhafterweise Mittel vorgesehen, mit denen die Distanz zwischen Stanzaggregat und Klammer kraftschlüssig überbrückt werden kann. Dies kann beispielsweise über gegenläufige Präzisionskeile erreicht werden.

Die Erfindung wird nachstehend anhand eines in den Zeichnungen dargestellten Ausführungsbeispiels näher erläutert. Es zeigen
- Fig. 1: eine Vorderansicht auf eine erfindungsgemäße Karrenbalkenstanze,
- Fig. 2: eine vergrößerte Teilansicht im Bereich des Stanzaggregats,
- Fig. 3: einen Vertikalschnitt durch die Stanzvorrichtung entlang der in Fig. 2 dargestellten Linie III-III,
- Fig. 4: einen Horizontalschnitt entlang der in den Fig. 2 und 3 dargestellten Linie IV-IV und
- Fig. 5: eine Detaildarstellung des in Fig. 4 mit A gekennzeichneten Kraftübertragungsbereichs.

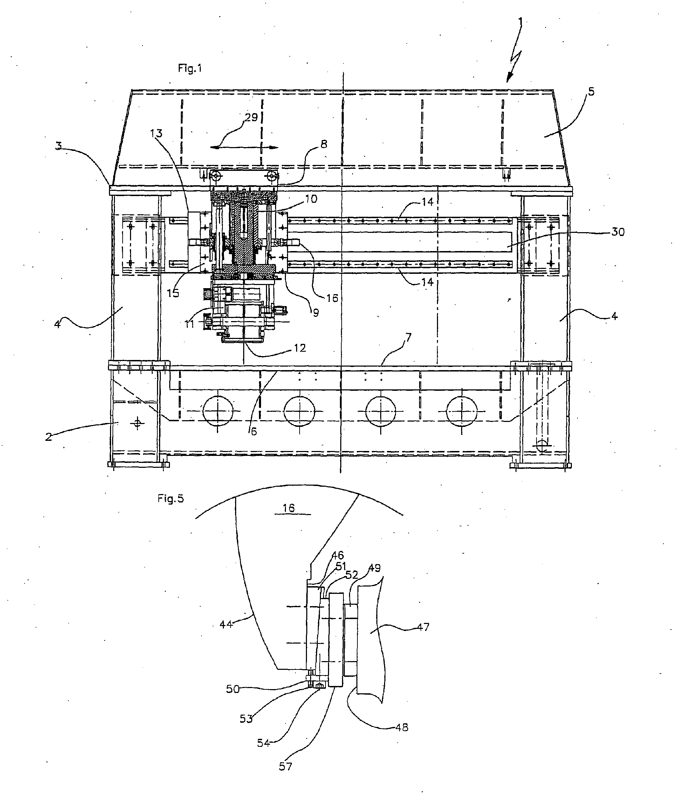

In Fig. 1 sieht man zunächst eine Karrenbalkenstanze 1, die sich im wesentlichen aus einem Unterbau 2 und einem darauf sitzenden portalförmigen Rahmen 3 mit den seitlichen Stützen 4 und den die oberen Enden der Stützen 4 in Darstellungsebene verbindenden Maschinenträger 5 zusammensetzt. Der Unterbau 2 trägt den Stanztisch 6, dessen horizontale Oberseite 7 sich durch den portalförmigen Rahmen 3 hindurch erstreckt. Im unteren Bereich des Maschinenträgers 5 ist eine erste Linearführung 8 angeordnet, entlang der ein daran befestigtes Stanzaggregat 9 in der Darstellungsebene quer verfahren werden kann, was durch den Pfeil 29 versinnbildlicht sein soll. Dabei hängt das Stanzaggregat 9 über der Oberseite 7 des Stanztisches 6 in dem vom portalförmigen Rahmen 3 umschlossenen lichten Raum.

Das Stanzaggregat 9 weist als wesentliche Bestandteile eine Zylinderkolbeneinheit 10 auf, deren bewegliches Teil den Stanzkopf 11 trägt. Der Stanzkopf 11 kann als Revolverkopf ausgebildet sein, so dass er eine Mehrzahl von Stanzwerkzeugen bevorratet, von denen in Fig. 1 ein in Arbeitsposition befindliches Stanzmesser 12 dargestellt ist.

Insoweit besteht noch Übereinstimmung mit den aus dem Stand der Technik bekannten Stanzvorrichtungen.

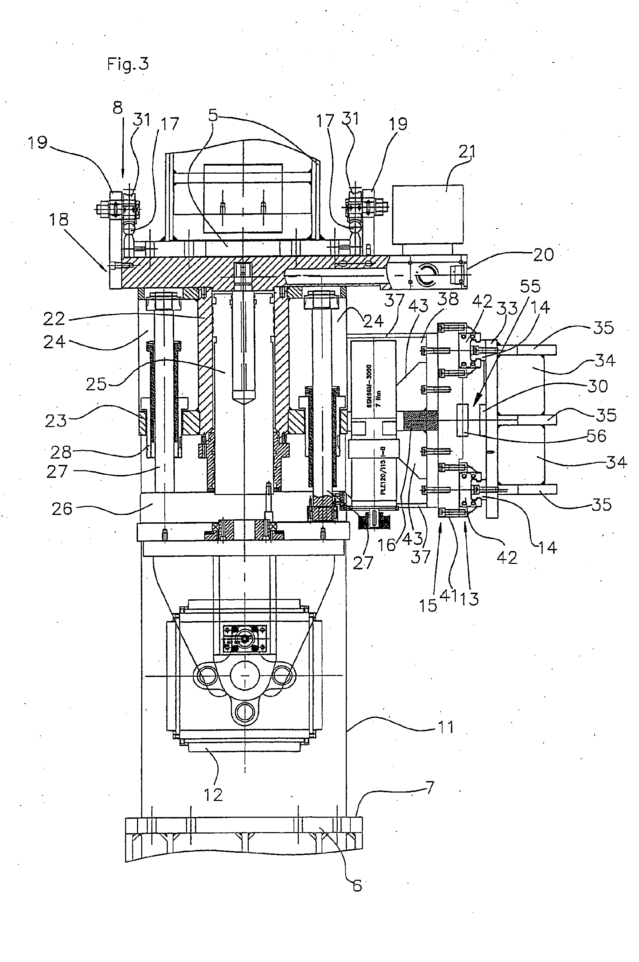

Darüber hinaus besitzt die erfindungsgemäße Karrenbalkenstanze 1 eine zweite Linearführung 13, die sich von der linken zur rechten Stütze 4 erstreckt und, bezogen auf die Darstellungsebene, nach hinten versetzt angeordnet ist, was vor allem aus Fig. 3 näher hervorgeht. Die zweite Linearführung 13 weist zwei achsparallele Führungsschienen 14 auf, auf denen ein Schlitten 15 verschieblich gelagert ist. Mit dem Schlitten 15 ist eine sich senkrecht zur Darstellungsebene erstreckende Zange 16 befestigt, deren freie Enden kraftschlüssig mit dem Stanzaggregat 9 verbunden sind. Die Antriebseinrichtung für den Schlitten 17 umfasst einen Linearmotor, dessen Primärteil an der Unterseite des Schlittens 15 sitzt, während dessen Sekundärteil in Form einer Magnetbahn 30 mittig zwischen den Führungsschienen 14 der zweiten Linearführung 13 angeordnet ist.

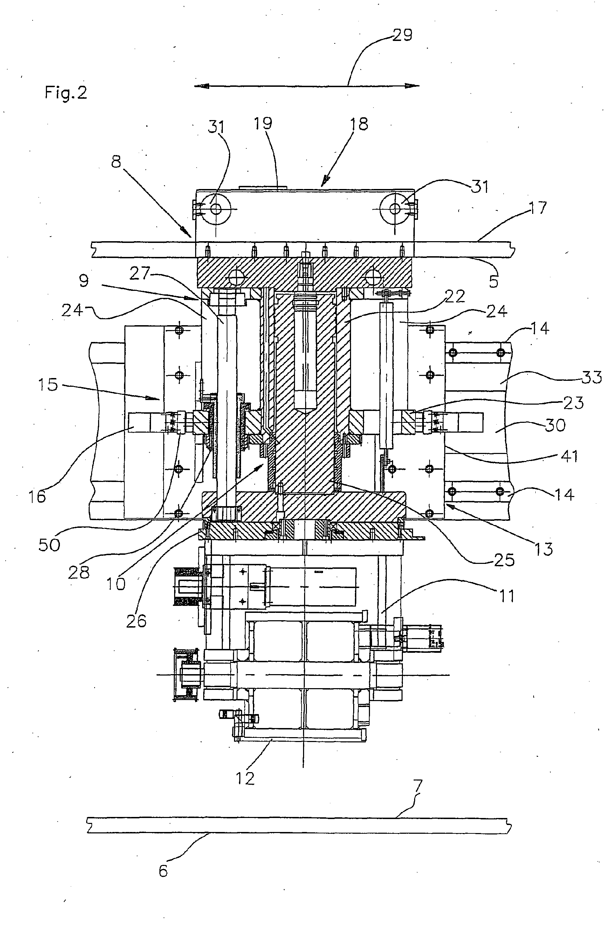

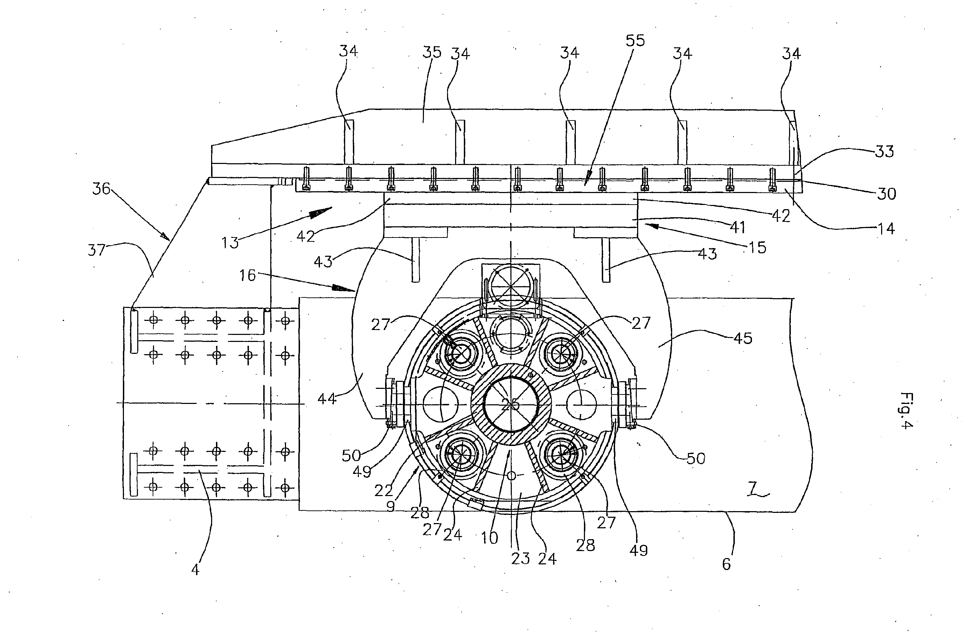

Die genauere Anordnung von Stanzaggregat 9, erster Linearführung 8 und zweiter Linearführung 13 wird im folgenden anhand der Fig. 2 bis 4 näher erläutert. Dabei wird auf selbstverständlich vorhandene Teile wie zum Beispiel die elektrische und hydraulische Versorgung sowie Wegmesssysteme und eine programmierbare Folgesteuerung nicht näher eingegangen.

In den Fig. 2, 3 und 4 sieht man zunächst noch die Oberseite 7 des Stanztisches 6 und die ihr im Abstand gegenüberliegend Unterseite des Maschinenträgers 5 mit den beiden achsparallelen und sich über die gesamte Länge des Maschinenträgers 5 erstreckenden Laufschienen 17 als Teil der ersten Linearführung 8, die eine Bahn bildet für einen daran aufgehängten und quer verfahrbaren Wagen 18, der den beweglichen Teil der Linearführung 8 darstellt.

Der Wagen 18 besteht im wesentlichen aus den beiden parallel zueinander angeordneten Wagenseiten 19, deren unterer Rand über eine horizontale Tragplatte 20 verbunden ist, so dass der Wagen 18 im Querschnitt eine etwa trogförmige Gestalt annimmt. Die Tragplatte 20 ragt teilweise über die in Fig. 3 rechts dargestellte Wagenseite 19 hinaus und bietet so Platz zur Aufnahme eines Hydraulikblocks 21 zur hydraulischen Versorgung der Zylinderkolbeneinheit 10. Seitlich innen sind jeweils paarweise Laufrollen 31 an den Wagenseiten 19 frei drehbar angebracht, die auf den Laufschienen 17 abrollen.

Das Stanzaggregat 9 ist starr mit der Unterseite der Tragplatte 20 verbunden. Mittig unterhalb des Maschinenträgers 5 erstreckt sich in vertikaler Richtung der feste Hohlzylinder 23 der Zylinderkolbeneinheit 10 in Richtung zum Stanztisch 6. An seinem unteren offenen Ende wird der Hohlzylinder 22 umfangsseitig von einer zur Tragplatte 20 parallelen in etwa kreisförmigen Abschlussplatte 23 flanschartig eingefasst. Zur Aussteifung der Konstruktion sind radiale Verstärkungsrippen 24 zwischen Tragplatte 20 und Abschlussplatte 23 eingeschweißt, so dass sich ein äußerst steifer Grundkörper ergibt.

In dem Hohlzylinder 22 ist der bewegliche Kolben 25 der Zylinderkolbeneinheit 10 verschieblich gelagert und kann hydraulisch über den Hydraulikblock 21 zum Einoder Ausfahren angesteuert werden. Am unteren Ende des Kolbens 25 sitzt mittig eine horizontale Kopfplatte 26, die wiederum zur Aufnahme des Werkzeugkopfes 27 dient, an dessen Unterseite das Stanzmesser 12 direkt gegenüber der Oberseite 7 des Stanztisches 6 angeordnet ist.

Zur Führung des Kolbens 25 während des Absenkens des Stanzkopfes 11 sind kranzförmig um die Zylinderkolbeneinheit 10 verteilte achsparallele Führungsstangen 27 zwischen Tragplatte 20 und Kopfplatte 26 vorgesehen. Die Führungsstangen 27 erstrecken sich durch Öffnungen in der Abschlussplatte 23, die zu diesem Zweck in diesem Bereich mit Gleitführungen 28 ausgestattet ist.

Aus den Fig. 2 bis 4 geht zudem hervor, dass eine zweite Linearführung 13 aus der Vertikalebene des Rahmens 3 nach hinten versetzt die beiden Seitenstützen 4 verbindet. Die Linearführung 13 ist nach Art eines horizontal verlaufenden Querbalkens ausgebildet, der im wesentlichen aus einer streifenförmigen Grundplatte 33 besteht, die an ihrer Hinterseite über Querrippen 34 und Längsrippen 35 ausgesteift ist. Die Enden der zweiten Linearführung 13 sind über einen Haltekasten 36, bestehend aus einem umlaufenden Blech 37 mit Aussteifungsrippe 38, jeweils an einer Seitenstütze 4 angeflanscht. Wie insbesondere aus Fig. 3 ersichtlich, nimmt die Linearführung 13 dabei eine Position in Höhe der Abschlussplatte 23 ein.

Auf der Vorderseite der Grundplatte 33 sind am oberen und unteren Rand jeweils eine Schiene 14 befestigt, deren Profil im Querschnitt einen verbreiterten Kopf aufweist. Die Schienen 14 bilden zusammen mit der Grundplatte 33 den starren Teil der zweiten Linearführung 13.

Der bewegliche Teil der Linearführung 13 besteht im wesentlichen aus einem Schlitten 15, der sich aus einer rechteckförmigen Plattform 41 und daran befestigten Schiebekörpern 42 zusammensetzt. Die Plattform 41 liegt der Grundplatte 33 planparallel gegenüber, wobei an der Unterseite der Plattform 41 in den Eckbereichen die Schiebekörper 42 befestigt sind, die formschlüssig die Schienen 14 umgreifen, um so eine Präzisionsführung auszubilden.

Die Vorderseite der Plattform 41 trägt eine in etwa sichelförmige Klammer 16, die in einer horizontalen Ebene senkrecht aus der Vorderseite der Plattform 41 ragt. Vier aufrecht zwischen Plattform 41 und Klammer 16 eingeschweißte Aussteifungsbleche 43 sorgen für eine sichere Befestigung der Klammer 16 am Schlitten 15.

Mit ihren Armen 44 und 45 umgreift die Klammer 16 das Stanzaggregat 9 umfangsseitig bis etwa zur Hälfte. Dabei bilden die Enden der Arme 44 und 45 in Höhe der Abschlussplatte 23, was in etwa dem Schwerpunkt des Stanzaggregats 9 entspricht, Kraftübertragungspunkte zum Stanzaggregat 9 aus.

In Fig. 5 ist ein solcher Kraftübertragungspunkt stellvertretend für beide Kraftübertragungspunkte im Detail dargestellt. Man sieht das Ende des Arms 44 der Klammer 16, dessen innere Seite als plane Auflagefläche 46 ausgebildet ist. Der Fläche 46 in lichtem Abstand gegenüberliegend sieht man einen Abschnitt 47 des Umfangs der Abschlussplatte 23. Der Abschnitt 47 weist ebenfalls eine Kontaktfläche 48 auf, die planparallel zur Auflagefläche 46 verläuft. Der lichte Raum zwischen den Flächen 46 und 48 ist von einer Distanzplatte 49 und einer Keilanordnung 50 ausgefüllt. Die Keilanordnung 50 besteht aus zwei, auf einem Basiselement 57 geführten, gegenläufigen Keilen 51 und 52, die mit Hilfe der Einstellschrauben 53 und 54 in ihrer relativen Position zueinander einstellbar sind. Auf diese Weise lässt sich eine völlig spielfreie Kraftübertragung zwischen Klammer 16 und Stanzaggregat 9 herstellen.

Die Antriebseinrichtung für den Schlitten 15 besteht im wesentlichen aus einem Linearmotor 55, dessen Sekundärteil in Form einer Magnetbahn 30 achsparallel und mittig zwischen den Schienen 14 der zweiten Linearführung 13 verläuft und fest mit der Grundplatte 33 verbunden ist. An der Rückseite des Schlittens 15, der Magnetbahn 30 in geringem Abstand gegenüberliegend, sieht man den Primärteil des Linearmotors 55 in Form eines Blechpakets 56 mit dreiphasiger Wicklung. Durch Beaufschlagung der Antriebseinrichtung mit elektrischer Energie wird eine Vorschubkraft zwischen Magnetbahn 30 und Blechpaket 56 erzeugt, die den Schlitten 15 entlang der Linearführung 13 verschiebt. Über die Klammer 16 wird die Bewegungsenergie auf das Stanzaggregat 9 übertragen, das infolge seiner verschieblichen Lagerung an der Unterseite des Maschinenträgers 5 entlang der Linearführung 8 den Bewegungen des Schlittens 15 folgt. Auf diese Weise wird mit Hilfe des Linearmotors 55 das Stanzaggregat 9 zwischen den einzelnen Hüben quer verfahren.

| Bezugszeichenliste: | | | |
|---|---|---|---|
| 1 | Karrenbalkenstanze | 48 | Fläche |
| 2 | Unterbau | 49 | Distanzplatte |
| 3 | Portalförmiger Rahmen | 50 | Keilanordnung |
| 4 | Seitenstützen | 51 | Keil |
| 5 | Maschinenträger | 52 | Keil |
| 6 | Stanztisch | 53 | Einstellschraube |
| 7 | Oberseite | 54 | Finstellschraube |
| 8 | 1.Linearführung | 55 | Linearmotor |
| 9 | Stanzaggregat | 56 | Blechpacket |
| 10 | Zylinder-Kolber-Einheit | 57 | Basiselement |
| 11 | Stanzkopft | 58 | |
| 12 | Stanzmesser | 59 | |
| 13 | zweite Linearführung | 60 | |
| 14 | Führungsschiene | 61 | |
| 15 | Schlitten | 62 | |
| 16 | Zange | 63 | |
| 17 | Laufschienen | 64 | |
| 18 | Wagen | 65 | |
| 19 | Wagenseiten | 66 | |
| 20 | Tragplatte | 67 | |
| 21 | Hydraulikblock | 68 | |
| 22 | Hohlzylinder | 69 | |
| 23 | Abschlussplatte | 70 | |
| 24 | Verstärkungsrippen | 71 | |
| 25 | Kolben | 72 | |
| 26 | Kopfplatte | 73 | |
| 27 | Führungsstangen | 74 | |
| 28 | Gleitführungen | 75 | |
| 29 | Pfeil | 76 | |
| 30 | Magnetbahn | 77 | |
| 31 | Laufrollen | 78 | |
| 32 | *unbesetzt* | 79 | |
| 33 | Grundplatte | 80 | |
| 34 | Querrippen | 81 | |
| 35 | Längsrippen | 82 | |
| 36 | Haltekasten | 83 | |
| 37 | umlaufendes Blech | 84 | |
| 38 | Aussteifung | 85 | |
| 39 | *unbesetzt* | 86 | |
| 40 | *unbesetzt* | 87 | |
| 41 | plattform | 88 | |
| 42 | Schiebekörper | 89 | |
| 43 | Aussteifungsblech | 89 | |
| 44 | Arm | 90 | |
| 45 | Arm | 91 | |
| 46 | Auflagefläche | 92 | |
| 47 | Abschnitt | 94 | |

## Patentansprüche

1. Vorrichtung zum Stanzen von Stanzgut, insbesondere Karrenbalkenstanze (1), mit einem Stanztisch (6) zur Aufnahme des Stanzguts und einem Stanzaggregat (9), das für den Stanzvorgang auf den Stanztisch (6) absenkbar ist, wobei das Stanzaggregat (9) zumindest in einer Richtung parallel zur Oberfläche (7) des Stanztisches (6) entlang einer ersten Linearführung (8) beweglich angeordnet und mit Hilfe eines Antriebs verstellbar ist, **dadurch gekennzeichnet, dass** der Antrieb einen Linearmotor (55) umfasst.

2. Vorrichtung nach Anspruch 1, **dadurch gekennzeichnet, dass** der Antrieb (55) schwerpunktnah angeordnet ist.

3. Vorrichtung nach Anspruch 1 oder 2, **dadurch gekennzeichnet, dass** der Antrieb (55) seitlich des Stanzaggregats (9) angeordnet ist.

4. Vorrichtung nach einem der Ansprüche 1 bis 3, **dadurch gekennzeichnet, dass** die Vorrichtung eine zweite Linearführung (13) aufweist, die parallel zur ersten Linearführung (8) ausgerichtet und entlang der der Antrieb (55) angeordnet ist.

5. Vorrichtung nach einem der Ansprüche 1 bis 4, **dadurch gekennzeichnet, dass** die zweite Linerarführung (13) parallele Schienen (14) aufweist zwischen denen der Sekundärteil (30) des Linearmotors (55) angeordnet ist und dass auf den Schienen (14) ein Schlitten (15) verschieblich gelagert, an dem der Primärteil (56) des Linearmotors (55) angeordnet ist.

6. Vorrichtung nach einem der Ansprüche 1 bis 5, **dadurch gekennzeichnet, dass** die Kraftübertragung vom Antrieb (55) auf das Stanzaggregat (9) mittelbar über einen Mitnehmer (16) erfolgt.

7. Vorrichtung nach Anspruch 6, **dadurch gekennzeichnet, dass** der Mitnehmer (16) in Bewegungsrichtung mittig am Stanzaggregat (9) ansetzt.

8. Vorrichtung nach Anspruch 6 oder 7, **dadurch gekennzeichnet, dass** der Mitnehmer (16) zwei Arme (44, 45) aufweist, die das Stanzaggregat (9) umgreifen und an diametral gegenüberliegenden Stellen (48) Kraftübertragungsbereiche bilden.

9. Vorrichtung nach Anspruch 8, **dadurch gekennzeichnet, dass** die Verbindungsgerade zwischen den beiden Kraftübertragungsbereichen im näheren Bereich des Schwerpunkts oder durch diesen hindurch verläuft.

10. Vorrichtung nach Anspruch 8 oder 9, **dadurch gekennzeichnet, dass** im Kraftübertragungsbereich Mittel (50) zur variablen Distanzüberbrückung zwischengeschaltet sind.

11. Vorrichtung nach Anspruch 10, **dadurch gekennzeichnet, dass** die Mittel (50) mindestens einem Keil (51, 52) aufweisen, der entlang einer gegenläufigen Keilfläche verschieblich ist.
